# DEMANDE DE BREVET EUROPEEN

(11) **EP 1 688 310 A1**
(43) Date de publication de la demande: **09.08.2006**
(21) Numéro de dépôt: 05290266.5
(22) Date de dépôt: 07.02.2005
(51) Int. Cl.: B60R 16/02, H01B 17/58, H02G 3/04

(54) **Dispositif de connexion pour le passage et la protection de câbles électriques, ou analogues, et son procédé de fabrication**

(71) Demandeur: CF Gomma Spa, 25050 Passirano (Brescia) (IT)
(72) Inventeur: Bloret, Jean-Pierre, 35700 Rennes (FR); Gourvellec, Philippe, 35160 Talensac (FR)
(74) Mandataire: Breese, Pierre

(57) **Abrégé**

La présente invention se rapporte à un dispositif de connexion (1) et son procédé de fabrication pour le passage et la protection de câbles électriques, ou analogues, comportant un corps souple (5) aux deux extrémités duquel est présent respectivement un moyen de fixation (3/4, 6), caractérisé en ce que le susdit corps (5) et l'un des deux moyens de fixation (6) sont en une seule matière tandis que l'autre moyen de fixation (3, 4) est en une autre matière rigide ou semi-rigide ; les deux ensembles (3,4 et 5,6) étant associés, ou fixés, l'un à l'autre grâce à des liaisons physico-chimiques existant entre les deux matières.

## Description

La présente invention se rapporte au domaine des dispositifs de connexion, de type fourreau coudé ou passe gaine, et de sécurité pour le passage de câbles électriques ou analogues. La présente invention se rapporte plus particulièrement à ce type de dispositifs de connexion utilisés dans les véhicules automobiles, notamment au niveau de la jonction entre l'habitacle et les ouvrants, portes, coffre, hayon.

L'art antérieur connaît déjà des dispositifs de connexion pour la protection et le passage de câbles électriques dans des voitures, au niveau des ouvertures de portes, constitués de deux parties, en thermoplastique, assemblées l'une à l'autre par la technique dite de « soudure lame chaude ».

Ces types de dispositifs de connexion sont coûteux car ils nécessitent de la main d'oeuvre ou une robotisation importante, en particulier pour réaliser les opérations de soudure après moulage des divers éléments constitutifs.

La présente invention entend remédier aux inconvénients de l'art antérieur en proposant un dispositif de connexion simple, robuste et peu coûteux. En effet, le procédé de réalisation de ce dispositif de connexion est automatique, c'est-à-dire n'implique pas d'intervention humaine lorsque le procédé est démarré et la pièce est obtenue en un temps extrêmement réduit.

Pour ce faire, la présente invention concerne un dispositif de connexion pour le passage et la protection de câbles électriques, ou analogues, comportant un corps souple aux deux extrémités duquel est présent respectivement un moyen de fixation, caractérisé en ce que le susdit corps et l'un des deux moyens de fixation sont en une seule matière tandis que l'autre moyen de fixation est en une autre matière rigide ; les deux ensembles étant associés, ou fixés, l'un à l'autre grâce à des liaisons physico-chimiques existants entre les deux matières.

Avantageusement, le deuxième moyen de fixation consistera en un insert en matériau thermoplastique, par exemple du polypropène chargé de fibre de verre.

Selon un mode de réalisation de l'invention, le deuxième moyen de fixation comprendra une pluralité d'éléments de clippage.

Avantageusement, le deuxième moyen de fixation pourra comprendre en outre au moins une languette d'accrochage.

Selon un aspect avantageux de l'invention, le premier moyen de fixation ainsi que le corps seront en thermoplastique élastomère, tel que le SEBS (Styrène Ethylène Butadiène Styrène) ou le polypropène EPDM (Ethylène Propylène Diène Monomère).

Selon un mode de réalisation de l'invention, le corps comprendra une partie présentant une forme en accordéon pour faciliter l'extension et la compression de sa longueur ainsi que sa déformation dans tous les plans.

Avantageusement, le premier ensemble comprendra sensiblement à ses deux extrémités opposées au moins un moyen d'étanchéité, tels que par exemple une lèvre souple.

Selon une possibilité offerte par l'invention, le premier moyen de fixation consistera en une zone de chaussage disposant d'une pluralité de cannelures de rigidification.

Selon une possibilité offerte par l'invention, le premier ensemble pourra se prolonger à son extrémité opposée au deuxième ensemble par un embout cylindrique.

La présente invention se rapporte également à un procédé pour la réalisation d'un dispositif de connexion conforme à l'une quelconque des revendications précédentes, caractérisé en ce qu'il comprend les étapes suivantes :
- injection de la matière constituant le premier ensemble rigide dans un moule,
- ouverture du moule,
- rotation d'un plateau entraînant le susdit premier ensemble,
- injection de la matière constituant le deuxième ensemble souple dans le moule,
- ouverture du moule,
- mise en place et soufflage par un dispositif de manière à autoriser le démoulage des deux ensembles,
- éjection du dispositif de connexion par un ensemble éjecteur.

Selon un mode d'exécution de l'invention, la rotation du plateau sera de 180°.

Avantageusement, le dispositif de soufflage comprend une buse pour l'injection d'air en vue du démoulage et une membrane gonflable destinée à assurer l'étanchéité entre ladite buse et le dispositif de connexion en devenir.

Avantageusement, le dispositif de soufflage comprendra en outre une enveloppe périphérique destinée à limiter le gonflement de la susdite membrane en vue du démoulage du dispositif de connexion.

Avantageusement, l'ensemble éjecteur, piloté par un vérin, aura pour fonction de décoller le premier ensemble rigide ou semi-rigide d'une partie du moule.

De préférence, l'envoi d'air par le dispositif de soufflage s'effectuera simultanément dans la membrane de gonflage, la buse et le vérin.

Grâce à l'invention, on obtient les avantages suivants :
- Gain de production comparé à l'état de l'art actuel qui est constitué d'une pièce en thermoplastique souple et d'un insert thermoplastique qui sont fabriqués suivant deux technologies différentes et ensuite ses deux éléments sont assemblés par thermosoudure,
- Technologie de la fabrication des thermoplastiques : temps de cycle court,
- Production automatique sans manipulation humaine,
- Assemblage des deux éléments constitutifs sans manipulation humaine, grâce aux interactions physico-chimiques entre les deux ensembles de matière.

On comprendra mieux l'invention à l'aide de la description, faite ci-après à titre purement explicatif, d'un mode de réalisation de l'invention, en référence aux figures annexées :

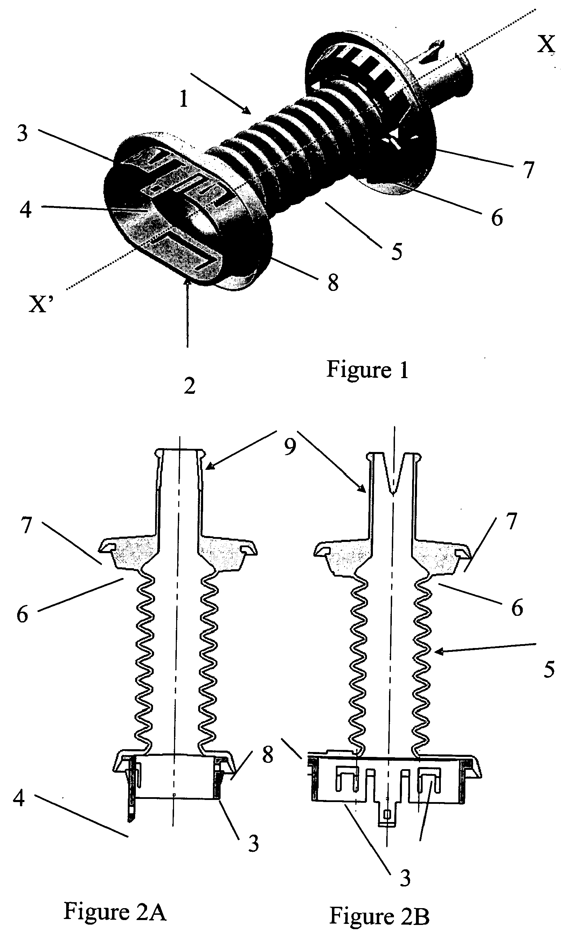

- la figure 1 illustre une vue en perspective du dispositif de connexion selon l'invention ;
- les figures 2A et 2B illustrent une vue en coupe du dispositif représenté sur la figure 1, selon deux plans perpendiculaires passant par l'axe XX' ;
- la figure 3 illustre une vue en coupe de la machine destiné à mettre en oeuvre le procédé de réalisation du dispositif de connexion selon l'invention, en début de procédé ; et
- la figure 4 illustre une vue en coupe sensiblement équivalente à la figure 3 avec le dispositif de soufflage.

Dans l'exemple choisi pour illustrer l'invention, le dispositif de connexion 1 pour câble électrique, ou analogues, également dénommé le fourreau de faisceau, est un ensemble ayant pour fonction d'assurer la protection entre la caisse d'un véhicule automobile et les ouvrants, en particulier les portes et volets.

Le dispositif de connexion selon l'invention est constitué de deux parties :
- un insert 2, rigide, en matériau thermoplastique, par exemple du polypropène, qui a pour fonction de se clipper sur une tôle qui peut appartenir à la caisse. Pour se faire, l'insert 2 comporte au moins un clip de verrouillage 3 servant à l'accrochage sur le trou de passage des fils, ou câbles électriques, dans la caisse. Dans l'exemple choisi pour illustrer l'invention, l'insert 2 comprend trois clips de verrouillage 3, mais il est bien entendu que leur nombre pourra être supérieur ou inférieur. Une languette d'accrochage 4, servant à assembler le connecteur électrique ce qui permet la continuité du circuit électrique tel une prise de courant. De la même manière que précédemment, il est tout à fait possible d'avoir une pluralité de languettes 4.
- une partie, ou corps 5, élastiquement déformable de par ses ondulations et par le matériau qui le constitue, soit dans notre exemple un Thermoplastique élastomère de dureté 50 Shore A, tel le SEBS (styrène éthylène butadiène -styrène) ou polypropène EPDM Ethylène propylène diène monomère (« santoprène »). Cette partie 5 comporte un moyen de fixation consistant en une zone de chaussage 6 sur porte et une lèvre d'étanchéité 7 périphérique empêchant la pénétration de l'eau, l'air poussière, etc....

À l'autre extrémité de la partie 5, une lèvre périphérique 8 assure la même fonction que la lèvre 7.

D'autre part, un embout cylindrique 9 permet l'enrubannage du faisceau électrique assurant ainsi le positionnement du fourreau sur le faisceau.

La liaison au niveau de l'interface entre la partie élastique 5 et la partie rigide 2 est assurée par une réaction physico-chimique entre les deux matériaux lors du surmoulage de la partie 5, dans notre exemple entre le polypropylène et le SEBS.

Dans la suite sera décrite la réalisation sur le principe du moulage sur presse thermoplastique bi-matière à plateau tournant. Cette description est non limitative et peut s'appliquer à d'autre type de machine et de principe de moulage comme par exemple :
- presse bi-matière avec transfert par robot, ou
- deux presses mono matière avec transfert par robot poutre entre les deux machines.

L'équipement nécessaire pour effectuer le procédé de réalisation comprend:
- un ensemble plateau tournant 10, comportant des noyaux identiques 14 et 14',
- un axe de rotation 11 du plateau tournant,
- deux empreintes 12 et 13, fixées à la presse, qui se referment sur les noyaux 14, 14' pour former le moule.

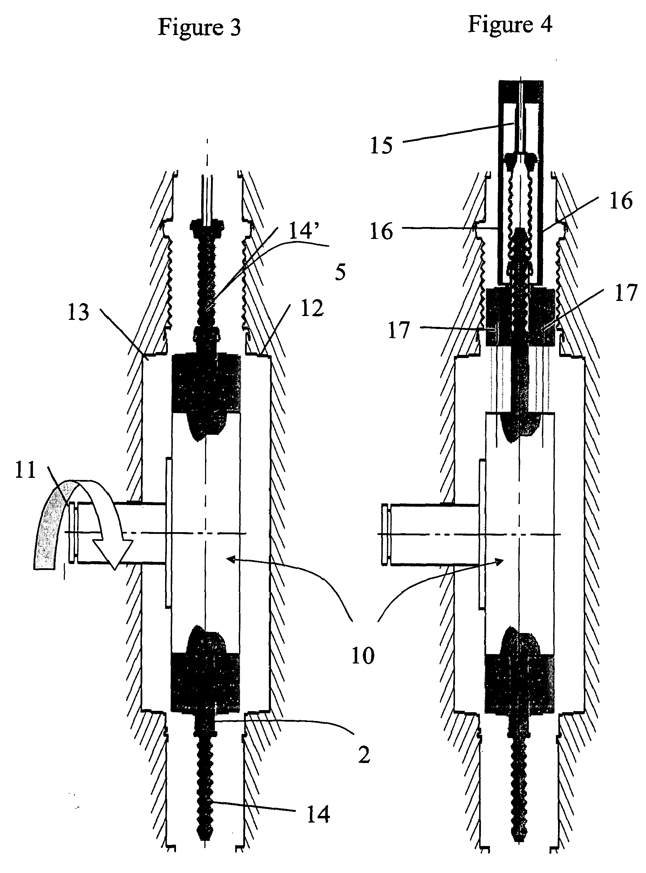

Le procédé de réalisation du dispositif de connexion selon l'invention consiste en un cycle comportant les étapes chronologiques suivantes :
- le démarrage du cycle machine commence, presse fermée, par l'injection de l'insert 2 thermoplastique ;
- l'ouverture du moule, rotation du plateau 10 autour de l'axe 11 qui présente l'insert 2 thermoplastique en position d'injection de la matière thermoplastique élastomère formant 5 ;
- la fermeture de la presse. Le noyau est réalisé en deux éléments : l'un pour le corps du noyau 14 ou 14' et l'autre pour la partie supérieure mobile, non visible sur les figures annexées ;
- injection du Thermoplastique élastomère formant 5 ;
- ouverture de la presse 12, 13 pour démoulage ;
- la presse 12, 13 ouverte, le noyau 14' se dégage verticalement piloté par exemple par un vérin, non représenté sur les figures annexées, en entraînant la susdite partie supérieure mobile ;
- la descente de la main du robot de démoulage qui comporte une buse qui prend la place de la partie du noyau et qui va permettre d'injecter la pression d'air nécessaire au démoulage ;
- la buse 15 comporte en outre une membrane gonflable, non visible sur les figures 3 ou 4, assurant l'étanchéité entre la buse 15 et la pièce lors du soufflage ;
- la main du robot comporte en plus une enveloppe périphérique 16 qui a pour effet de limiter le gonflement nécessaire au démoulage ;

Une plaque dévétisseuse ou un ensemble éjecteur 17 est reliée à un renvoi et pilotée par un vérin. L'ensemble éjecteur 17 va permettre de décoller l'insert 2 du noyau 14' et d'accompagner l'insert 2 lors du démoulage afin d'éviter la retenue sur le noyau 14' pendant le mouvement de démoulage.

Lors de l'action de démoulage, on envoie simultanément de l'air comprimé dans la membrane, dans la buse 15 et dans le vérin.

La plaque dévétisseuse 17, pilotée par le vérin, décolle l'insert 2 du noyau 14' et accompagne le début de la remonter verticale (5 mm par exemple) du robot. Sous l'effet de l'air comprimé injecté par la buse 15, le fourreau dont la partie thermoplastique élastomère gonfle. Le gonflement est limité par l'enveloppe 16 jusqu'au dégagement du noyau 14', obtenant ainsi le démoulage de l'ensemble sans éclatement ni rupture.

Le robot se déplace ensuite vers le tapis ou le contenant de réception. L'arrivée d'air dans la main du robot est coupée. La pièce, ou dispositif de connexion selon l'invention 1, est déposée sur le tapis ou tombe dans le contenant.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif de connexion (1) pour le passage et la protection de câbles électriques, ou analogues, comportant un corps souple (5) aux deux extrémités duquel est présent respectivement un moyen de fixation (3/4, 6), **caractérisé en ce que** le susdit corps (5) et l'un des deux moyens de fixation (6) sont en une seule matière tandis que l'autre moyen de fixation (3, 4) est en une autre matière rigide ; les deux ensembles (3,4 et 5,6), fixés l'un à l'autre grâce à des liaisons physico-chimiques existant entre les deux matières, formant un seul bloc venant de moulage.

2. Dispositif selon la revendication 1, **caractérisé en ce que** le deuxième moyen de fixation (3, 4) consiste en un insert (2) en matériau thermoplastique, par exemple du polypropène chargé de fibre de verre.

3. Dispositif selon la revendication 1 ou la revendication 2, **caractérisé en ce que** le deuxième moyen de fixation (3, 4) comprend une pluralité d'éléments de clippage (3 et 4).

4. Dispositif selon la revendication 3, **caractérisé en ce que** le deuxième moyen de fixation (3, 4) comprend en outre au moins une languette d'accrochage (4).

5. Dispositif selon l'une quelconque des revendications 1 à 4, **caractérisé en ce que** le premier moyen de fixation (6) ainsi que le corps (5) sont en thermoplastique élastomère, tel que le SEBS (Styrène Ethylène Butadiène Styrène) ou le polypropène EPDM (Ethylène Propylène Diène Monomère).

6. Dispositif selon l'une quelconque des revendications 1 à 5, **caractérisé en ce que** le corps (5) comprend une partie présentant une forme en accordéon pour faciliter l'extension et la compression de sa longueur ainsi que sa déformation dans tous les plans.

7. Dispositif selon l'une quelconque des revendications précédentes, **caractérisé en ce que** le premier ensemble (6) comprend sensiblement à ses deux extrémités opposées au moins un moyen d'étanchéité (7 et 8), tels que par exemple une lèvre souple.

8. Dispositif selon l'une des revendications 5 à 7, **caractérisé en ce que** le premier moyen de fixation (6) consiste en une zone de chaussage disposant d'une pluralité de cannelures de rigidification.

9. Dispositif selon l'une des revendications 5 à 8, **caractérisé en ce que** le premier ensemble (5, 6) se prolonge à son extrémité opposée au deuxième ensemble par un embout cylindrique (9).

10. Procédé pour la réalisation d'un dispositif de connexion conforme à l'une quelconque des revendications précédentes, **caractérisé en ce qu'**il comprend les étapes suivantes :
- injection de la matière constituant le premier ensemble (2) rigide dans un moule,
- ouverture du moule (12, 13),
- rotation d'un plateau (10) entraînant le susdit premier ensemble (2),
- injection de la matière constituant le deuxième ensemble (5,6,7,8) souple dans le moule,
- ouverture du moule (12, 13),
- mise en place et soufflage par un dispositif de manière à autoriser le démoulage des deux ensembles (2 et 5),
- éjection du dispositif de connexion (1) par un ensemble éjecteur (17).

11. Procédé selon la revendication 10, **caractérisé en ce que** la rotation du plateau (10) est de 180°.

12. Procédé selon l'une quelconque des revendications 10 ou 11, **caractérisé en ce que** le dispositif de soufflage comprend une buse (15) pour l'injection d'air en vue du démoulage et une membrane gonflable destinée à assurer l'étanchéité entre ladite buse (15) et le dispositif de connexion (1) en devenir.

13. Procédé selon la revendication 12, **caractérisé en ce que** le dispositif de soufflage comprend en outre une enveloppe périphérique (16) destinée à limiter le gonflement de la susdite membrane en vue du démoulage du dispositif de connexion (1).

14. Procédé selon l'une quelconque des revendications 10 à 13, **caractérisé en ce que** l'ensemble éjecteur (17), piloté par un vérin, a pour fonction de décoller le premier ensemble rigide (2) d'une partie (14 ou 14') du moule (12, 13).

15. Procédé selon les revendications 12 et 14, **caractérisé en ce que** l'envoi d'air par le dispositif de soufflage s'effectue simultanément dans la membrane de gonflage, la buse (15) et le vérin.
